# EUROPEAN PATENT APPLICATION

(11) **EP 4 375 327 A1**
(43) Date of publication of application: **29.05.2024**
(21) Application number: 23177229.4
(22) Date of filing: 05.06.2023
(51) Int. Cl.: C08L 1/10, C08L 1/14

(54) **RESIN COMPOSITION, RESIN MOLDED PRODUCT, AND LAMINATE**

(30) Priority: 25.11.2022 JP 2022188753
(71) Applicant: FUJIFILM Business Innovation Corp., Minato-ku Tokyo (JP)
(72) Inventor: YAO, Kenji, Minamiashigara-shi (JP)
(74) Representative: Haseltine Lake Kempner LLP

(57) **Abstract**

A resin composition includes cellulose acylate A, polylactic acid B, and at least one compound C selected from the group including an ester compound and a cardanol compound. The content of the polylactic acid B relative to the content of the cellulose acylate A exceeds 0.5 and is 0.9 or less; and the content of the compound C relative to the content of the cellulose acylate A exceeds 0.15 and is 0.3 or less.

## Description

### Background

### (i) Technical Field

The present disclosure relates to a resin composition, a resin molded product, and a laminate.

### (ii) Related Art

Japanese Unexamined Patent Application Publication No. 2019-151787 proposes a resin composition including cellulose acylate, containing at least one selected from cellulose acetate propionate and cellulose acetate butyrate, polylactic acid, an ester compound having a molecular weight of 250 or more and 2000 or less, and a core-shell structure polymer having a core layer and a shell layer, containing a (meth)acrylic polymer, on the surface of the core layer. The ratio ((B)/(A)) of the mass (B) of the polylactic acid to the mass (A) of the cellulose acylate is 0.03 or more and 0.5 or less, the ratio ((C)/(A)) of the mass (C) of the ester compound to the mass (A) of the cellulose acylate is 0.03 or more and 0.15 or less, and the ratio ((D)/(A)) of the mass (D) of the core-shell structure polymer to the mass (A) of the cellulose acylate is 0.01 or more and 0.1 or less.

Japanese Patent No. 6524633 proposes a resin composition including a cellulose ester resin (A), an epoxy group-containing plasticizer (B) in an amount of 5 parts by mass or more and 10 parts by mass or less relative to 100 parts by mass of the cellulose ester resin (A), and an unreactive plasticizer (C), which is a polyether ester compound not having a functional group reactable with the cellulose ester resin (A), in an amount of 10 parts by mass or more and 30 parts by mass or less relative to 100 parts by mass of the cellulose ester resin (A).

### Summary

Accordingly, it is an object of the present disclosure to provide a resin composition including cellulose acylate A, polylactic acid B, and at least one compound C selected from a group including an ester compound and a cardanol compound, and the resin composition can produce a resin molded product having high fusionability with another member, as compared with when the content of the polylactic acid B relative to the content of the cellulose acylate A is 0.5 or less or exceeds 0.9 or when the content of the compound C relative to the content of the cellulose acylate A is 0.15 or less or exceeds 0.3.

It is another object of the present disclosure to provide a resin composition including cellulose acylate A, polylactic acid B, and at least one compound C selected from a group including an ester compound and a cardanol compound, and the resin composition can produce a resin molded product having high fusionability with another member, as compared with when the weld-line impact strength is 10 kJ/m² or more or when the weld-line impact strength relative to Charpy impact strength is 0.5 or more.

According to a first aspect of the present disclosure, there is provided a resin composition including cellulose acylate A, polylactic acid B, and at least one compound C selected from a group including an ester compound and a cardanol compound, in which the content of the polylactic acid B relative to the content of the cellulose acylate A exceeds 0.5 and 0.9 or less, and the content of the compound C relative to the content of the cellulose acylate A exceeds 0.15 and 0.3 or less.

According to a second aspect of the present disclosure, the resin composition according to the first aspect of the present disclosure includes core-shell structure particles D having a core layer and a shell layer present on the surface of the core layer.

According to a third aspect of the present disclosure, in the resin composition according to the second aspect of the present disclosure, the content of the particles D relative to the content of the cellulose acylate A is 0.05 or more and 0.15 or less.

According to a fourth aspect of the present disclosure, the resin composition according to any one of the first to third aspects of the present disclosure includes a metal oxide E.

According to a fifth aspect of the present disclosure, in the resin composition according the fourth aspect of the present disclosure, the content of the metal oxide E relative to the content of the cellulose acylate A is 0.05 or more and 0.15 or less.

According to a sixth aspect of the present disclosure, in the resin composition according to any one of the first to fifth aspects of the present disclosure, the cellulose acylate A is cellulose acetate propionate.

According to a seventh aspect of the present disclosure, there is provided a resin composition including cellulose acylate A; polylactic acid B; and at least one compound D selected from the group including an ester compound and a cardanol compound, in which the weld-line impact strength is less than 10 kJ/m², and the weld-line impact strength relative to Charpy impact strength is less than 0.5.

According to an eighth aspect of the present disclosure, there is provided a resin molded product including the resin composition according to any one of the first to seventh aspects of the present disclosure,

According to a ninth aspect of the present disclosure, there is provided a laminate including the resin molded product according to the eighth aspect of the present disclosure and another member laminated on the resin molded product.

According to a tenth aspect of the present disclosure, the laminate according to the ninth aspect of the present disclosure includes a component between the resin molded product and the other member.

According to the first aspect of the present disclosure, there is provided a resin composition which includes cellulose acylate A; polylactic acid B; and at least one compound D selected from the group including an ester compound and a cardanol compound, and which can produce a resin molded product having high fusionability with another member as compared with when the content of the polylactic acid B relative to the content of the cellulose acylate A is 0.5 or less or exceeds 0.9 or when the content of the compound C relative to the content of the cellulose acylate A 0.15 or less or exceeds 0.3.

According to the second aspect of the present disclosure, there is provided a resin composition which can produce a resin molded product having high fusionability with another member as compared with when the particles D are not contained.

According to the third aspect of the present disclosure, there is provided a resin composition which can produce a resin molded product having high fusionability with another member as compared with when the content of the particles D relative to the content of the cellulose acylate A is less than 0.05 or exceeds 0.15.

According to the fourth aspect of the present disclosure, there is provided a resin composition which can produce a resin molded product having high fusionability with another member as compared with when the metal oxide E is not contained.

According to the fifth aspect of the present disclosure, there is provided a resin composition which can produce a resin molded product having high fusionability with another member as compared with when the content of the metal oxide E relative to the content of the cellulose acylate A is less than 0.05 or exceeds 0.15.

According to the sixth aspect of the present disclosure, there is provided a resin composition which can produce a resin molded product having high fusionability with another member as compared with when the cellulose acylate A is diacetyl cellulose and when the cellulose acylate A is cellulose acetate butyrate.

According to the seventh aspect of the present disclosure, there is provided a resin composition which includes cellulose acylate A; polylactic acid B; and at least one compound D selected from the group including an ester compound and a cardanol compound, and which can produce a resin molded product having high fusionability with another member as compared with when the weld-line impact strength is 10 kJ/m² or more or when and the weld-line impact strength relative to Charpy impact strength is 0.5 or more.

According to the eighth, ninth, or tenth aspect of the present disclosure, there is provided a resin composition which includes cellulose acylate A; polylactic acid B; and at least one compound D selected from the group including an ester compound and a cardanol compound, and which can produce a resin molded product having high fusionability with another member or a laminate including the resin molded product as compared with when the content of the polylactic acid B relative to the content of the cellulose acylate A is 0.5 or less or exceeds 0.9 or when the content of the compound C relative to the content of the cellulose acylate A 0.15 or less or exceeds 0.3. Also, there is provided a resin composition which includes cellulose acylate A; polylactic acid B; and at least one compound D selected from the group including an ester compound and a cardanol compound, and which can produce a resin molded product having high fusionability with another member or a laminate including the resin molded product as compared with when the weld-line impact strength is 10 kJ/m² or more or when the weld-line impact strength relative to Charpy impact strength is 0.5 or more.

### Detailed Description

An exemplary embodiment of the present disclosure is described below. The description and examples illustrate the present disclosure, and does not limit the scope of the present disclosure.

In the numerical ranges stepwisely described in the present specification, the upper limit value or the lower limit value described in one of the numerical ranges may be replaced by the upper limit value or the lower limit value in another numerical range stepwisely described. In addition, in a numerical range described in the present specification, the upper limit value or the lower limit value of the numerical range may be replaced by the value described in an example.

In addition, each component may contain plural materials corresponding to the component. In description of the amount of each of the components in a composition, when plural materials corresponding to each of the components are present in the composition, the amount of each of the components represents the total amount of the plural materials present in the composition unless otherwise specified.

In the exemplary embodiment, the term "process" includes not only an independent process but also even a process which cannot be distinguished from another process when the initial object of the process is achieved.

### <Resin composition>

A resin composition according to an exemplary embodiment of the present disclosure (also referred to as a "resin composition according to a first exemplary embodiment" hereinafter) includes cellulose acylate A, polylactic acid B, and at least one compound C selected from a group including an ester compound and a cardanol compound, in when the content of the polylactic acid B relative to the content of the cellulose acylate A exceeds 0.5 and 0.9 or less, and the content of the compound C relative to the content of the cellulose acylate A exceeds 0.15 and 0.3 or less.

The resin composition according to the first exemplary embodiment has the configuration described above and thus can produce a resin molded product having excellent fusionability with another member. The reason for this is supposed as follows.

Both the cellulose acylate A and the polylactic acid B independently tend to have low fusionability. The reason for this is that surface softening hardly occurs due to the high thermal deformation temperature of the cellulose acylate A, and the polylactic acid B has a low thermal deformation temperature but surface softening hardly occurs due to the high elastic modulus thereof.

The resin composition according to the first exemplary embodiment includes the cellulose acylate A and the polylactic acid B. The inclusion of the cellulose acylate A and the polylactic acid B may decrease the thermal deformation temperature and decrease the elastic modulus, thereby enabling to accelerate surface softening. In order to more improve the surface softening effect, the content of the polylactic acid B relative to the content of the cellulose acylate A is required to exceed 0.5 and to be 0.9 or less. When this content is 0.5 or less, surface softening becomes insufficient due to the insufficient effect of decreasing the thermal deformation temperature. Conversely when this content exceeds 0.9, surface softening becomes insufficient due to the excessively high elastic modulus.

The surface softening of the resin composition advantageously acts on fusionability, but just the surface softening is not sufficient. Therefore, the resin composition according to the first exemplary embodiment further includes at least one compound C selected from a group including an ester compound and a cardanol compound. Thus, the compound C functions as a plasticizer and more accelerates surface softening of the resin composition, and when pressure is applied to the resin composition and another member for fusion bonding, a small amount of the compound C seeps out from the contact surfaces and is dissolved into the surfaces of the resin composition and the other member, thereby exhibiting excellent fusionability. The compound C tends to be unevenly more distributed in the cellulose acylate A than in the polylactic acid B due to high affinity, but the content of the compound C relative to the content of the cellulose acylate A is required to exceed 0.15 and to be 0.3 or less. When this content is 0.15 or less, the compound C little seeps out, and fusionability becomes insufficient. Conversely, when this content exceeds 0.3, the compound C excessively seeps out and seeps out from the fusion interface, thereby causing an appearance defect.

Therefor, it is supposed that the resin composition according to the first exemplary embodiment produces a resin molded product having excellent fusionability with another member.

A resin composition according to another exemplary embodiment of the present disclosure (also referred to as a "resin composition according to a second exemplary embodiment" hereinafter) includes cellulose acylate A, polylactic acid B, and at least one compound C selected from a group including an ester compound and a cardanol compound, in which the weld-line impact strength is less than 10 kJ/m², and the weld-line impact strength relative to Charpy impact strength is less than 0.5.

The resin composition according to the second exemplary embodiment has the configuration described above and thus can produce a resin molded product having excellent fusionability with another member. The reason for this is supposed as follows.

When molecules strongly enter into contact surfaces of resin compositions each including the cellulose acylate A, the polylactic acid B, and at least one compound C selected from a group including an ester compound and a cardanol compound, the contact surfaces become unclear, and thus the surface softening and dissolving effect of the resin composition is hardly exhibited. The strong molecular entering increases the weld-line impact strength and consequently increases the ratio of weld-line impact strength to Charpy impact strength. With the ratio of 0.5 or more, fusionability becomes insufficient. Also, with the weld-line impact strength of 10 kJ/m² or more, collision caused by resin flow develops the strong tendency of molecules to be arranged only in the direction perpendicular to the collision surface, that is, the contact surface of the resin composition. Therefore, entanglement of molecules parallel to the contact surface is decreased, and thus fusion strength of a resultant resin molded product becomes insufficient.

Therefor, it is supposed that the resin composition according to the second exemplary embodiment produces a resin molded product having excellent fusionability with another member.

A resin composition (referred to as a "resin composition according to the present exemplary embodiment" hereinafter) corresponding to both the resin compositions according to the first exemplary embodiment and the second exemplary embodiment is described in detail below. However, the resin composition according to the present exemplary embodiment may be a resin composition corresponding to any one of the resin compositions according to the first exemplary embodiment and the second exemplary embodiment.

### (Cellulose acylate A)

The resin composition according to the present exemplary embodiment includes the cellulose acylate A. The cellulose acylate A may be simply referred to as the "cellulose acylate" hereinafter.

The cellulose acylate is a cellulose derivative in which at least some of the hydroxyl groups of cellulose are substituted by acyl groups (acylated). An acyl group is a group having a structure of -CO-R^{AC} (R^{AC} represents a hydrogen atom or a hydrocarbon group).

The cellulose acylate is, for example, a cellulose derivative represented by general formula (CA) below.

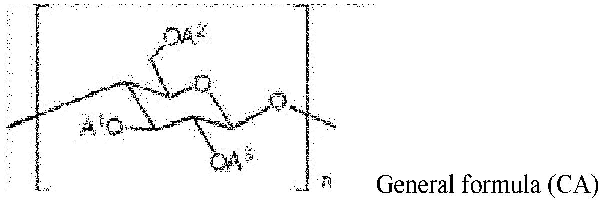

In the general formula (CA), A¹, A², and A³ each independently represent a hydrogen atom or an acyl group, and n represents an integer of 2 or more. However, at least some of n groups as A¹, A², and A³ represent acyl groups. The n groups as A¹present in the molecule may be wholly or partially the same or different from each other. Similarly, the n groups as each of A²and A³ present in the molecule may be wholly or partially the same or different from each other.

The hydrocarbon group in an acyl group represented by each of A¹, A², and A³ may be linear, branched, or cyclic, but the hydrocarbon group is preferably linear or branched and more preferably linear.

The hydrocarbon group in an acyl group represented by each of A¹, A², and A³ may be either a saturated hydrocarbon group or an unsaturated hydrocarbon group, but a saturated hydrocarbon group is more preferred.

The acyl group represented by each of A¹, A², and A³ is preferably an acyl group having 1 or more and 6 or less carbon atoms. That is, the cellulose acylate is preferably cellulose acylate containing an acyl group having 1 or more and 6 or less carbon atoms.

The acyl group represented by each of A¹, A², and A³ may be a group in which a hydrogen atom is substituted by a halogen atom (for example, a fluorine atom, a bromine atom, or an iodine atom), an oxygen atom, a nitrogen atom, or the like, but an unsubstituted group is preferred.

Examples of the acyl group represented by each of A¹, A², and A³ include a formyl group, an acetyl group, a propionyl group, a butyryl group (butanoyl group), a propenoyl group, a hexanoyl group, and the like. Among these, from the viewpoint of improvement in biodegradation rate of resin particles, the acyl group is more preferably an acyl group having 2 or more and 4 or less carbon atoms and still more preferably an acyl group having 2 or 3 carbon atoms.

Examples of the cellulose acylate include cellulose acetate (cellulose monoacetate, cellulose diacetate (DAC), and cellulose triacetate), cellulose acetate propionate (CAP), cellulose acetate butyrate (CAB), and the like.

From the viewpoint of fusionability, the cellulose acylate is preferably cellulose acetate propionate.

When cellulose acetate propionate is used as the cellulose acylate, the cellulose acylate has two types of substituents, and intermolecular repulsion is decreased. Further, entanglement of molecular chains can be maintained because the substituents are not too large, and thus excellent fusionability can be realized.

The cellulose acylates may be used alone or in combination of two or more.

The weight-average degree of polymerization of the cellulose acylate is preferably 200 or more and 1000 or less, more preferably 500 or more and 1000 or less, and still more preferably 600 or more and 1000 or less.

The weight-average degree of polymerization of the cellulose acylate is determined from the weight-average molecular weight (Mw) according to procedures below.

First, the weight-average molecular weight (Mw) of the cellulose acylate is measured in terms of polystyrene by a gel permeation chromatography apparatus (GPC apparatus: manufactured by Tosoh Corporation, HCL-8320GPC, column: TSKgel α-M) using tetrahydrofuran.

Next, the degree of polymerization of the cellulose acylate is determined by division by the constituent unit molecular weight of the cellulose acylate. For example, when the substituent of the cellulose acylate is an acetyl group, the constituent unit molecular weight is 263 with a substitution degree of 2.4 and is 284 with a substitution degree of 2.9.

From the viewpoint of biodegradability, the substitution degree of the cellulose acylate is preferably 1.7 or more and 2.9 or less, more preferably 1.9 or more and .2.9 or less, still more preferably 2.0 or more and 2.9 or less, and particularly preferably 2.1 or more and 2.9 or less.

The substitution degree of cellulose acylate represents an index indicating the degree in which hydroxyl groups possessed by cellulose are substituted by acyl groups. That is, the substitution degree is an index indicating the degree of acylation of the cellulose acylate. Specifically, the substitution degree represents the intramolecular average number of substitutions of three hydroxyl groups present in the D-glucopyranose of the cellulose acylate by acyl groups. The substitution degree is determined by an integration ratio between the peaks of cellulose-derived hydrogen and acyl group-derived hydrogen in ¹H-NMR (JMN-ECA/manufactured by JEOL RESONANCE Inc.).

### (Polylactic acid B)

The resin composition according to the present exemplary embodiment includes the polylactic acid B. The polylactic acid B is also simply referred to as the "polylactic acid" hereinafter.

The polylactic acid is a homopolymer of lactic acid and is a compound represented by formula (PLA) below.

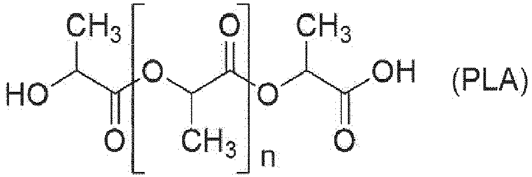

In the formula (PLA), n represents an integer of 2 or more.

The upper limit of n is not particularly limited, but is for example 20000 or less. The range of n is preferably 500 or more and 10000 or less and more preferably 1000 or more and 8000 or less.

### (Compound C)

The resin composition according to the present exemplary embodiment includes at least one compound C selected from a group including an ester compound and a cardanol compound.

### - Ester compound -

The ester compound is a compound containing an ester group (*-CO-O-* wherein + represents a bond), other than the cellulose acylate, the polylactic acid, and the cardanol compound.

Examples of the ester compound include fatty acid esters (an adipate ester, a citrate ester, a sebacate ester, an azelate ester, a phthalate ester, and an acetate ester), phosphate esters, condensed phosphate esters, glycol esters (for example, benzoic acid glycol ester), modified compounds of fatty acid esters (for example, epoxylated fatty acid esters), and the like. Examples of the esters include monoester, diester, triester, polyester, and the like. Among these, dicarboxylic acid diesters (adipate diester, sebacate diester, azelate diester, phthalate diester, and the like.) are preferred.

The ester compound is preferably at least one selected from the group including an adipate ester, a citrate ester, and a sebacate ester.

A mixture of an adipate ester and another component may be used as an adipate ester. Examples of a commercial product of the mixture include Daifatty 101 manufactured by Daihachi Chemical Industry Co., Ltd. and the like.

A fatty acid ester, such as an adipate ester, a citrate ester, a sebacate ester, an azelate ester, a phthalate ester, or an acetate ester, is, for example, an ester of fatty acid and alcohol. Examples of the alcohol include monohydric alcohols such as methanol, ethanol, propanol, butanol, 2-ethylhexanol, and the like; polyhydric alcohols such as glycerin, polyglycerin (diglycerin and the like), pentaerythritol, ethylene glycol, diethylene glycol, propylene glycol, butylene glycol, trimethylolpropane, trimethylolethane, sugar alcohol, and the like; and the like.

Examples of glycol of benzoic acid glycol ester include ethylene glycol, diethylene glycol, propylene glycol, and the like.

An epoxylated fatty acid ester is an ester compound having a structure (that is, oxacyclopropane) in which a carbon-carbon unsaturated bond of an unsaturated fatty acid ester is epoxylated. Examples of the epoxylated fatty acid ester include an ester of an unsaturated fatty acid (for example, oleic acid, palmitoleic acid, vaccenic acid, linoleic acid, linolenic acid, nervonic acid, or the like), in which caron-carbon unsaturated bonds are partially or wholly epoxylated, and an alcohol. Examples of the alcohol include monohydric alcohols such as methanol, ethanol, propanol, butanol, 2-ethylhsxanol, and the like; polyhydric alcohols such as glycerin, polyglycerin (diglycerin and the like), pentaerythritol, ethylene glycol, diethylene glycol, propylene glycol, butylene glycol, trimethylolpropane, trimethylolethane, sugar alcohol, and the like; and the like.

The molecular weight (or the weight-average molecular weight) of the ester compound is preferably 200 or more and 2000 or less, more preferably 250 or more and 1500 or less, and still more preferably 280 or more and 1000 or less. The weight-average molecular weight of the ester compound is a value measured according to the method for measuring the weight-average molecular weight of the cellulose acylate unless otherwise specified.

The ester compounds may be used alone or in combination of two or more.

### - Cardanol compound -

The cardanol compound represents a component (for example, a compound represented by structural formulae (b-1) to (b-4) below) contained in a compound naturally derived from cashew as a raw material, or a derivative of the component.

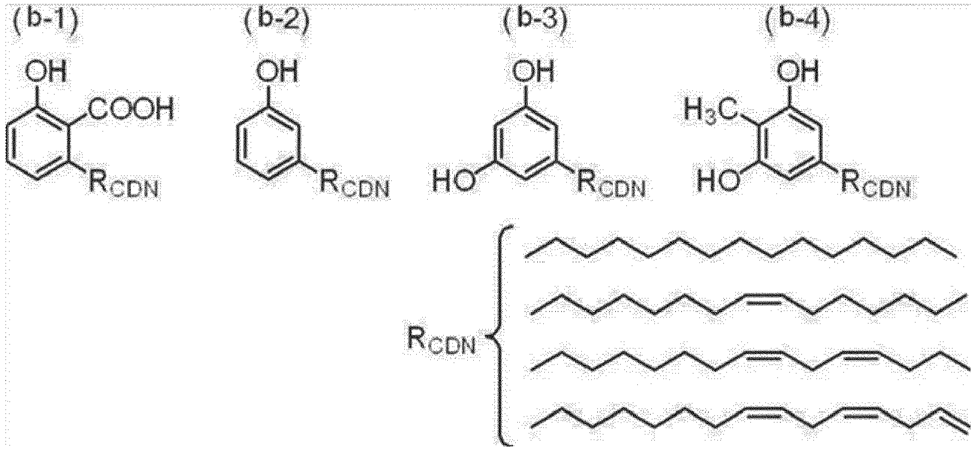

The cardanol compound may be a mixture (also referred to as a "cashew-derived mixture" hereinafter) of compounds naturally derived from cashew as a raw material.

The cardanol compound may also be a derivative from the cashew-derived mixture. Examples of the derivative from the cashew-derived mixture include the following mixtures, simple substances, and the like.
· A mixture having an adjusted composition ratio of the components in the cashew-derived mixture
· A simple substance containing only a specific component isolated from the components of the cashew-derived mixture
· A mixture containing a modified product produced by modifying the components in the cashew-derived mixture
· A mixture containing a polymer produced by polymerizing the components in the cashew-derived mixture
· A mixture containing a modified polymer produced by modifying and polymerizing the components in the cashew-derived mixture
· A mixture containing a modified product produced by modifying the components at adjusted composition ratios in the cashew-derived mixture
· A mixture containing a polymer produced by polymerizing the components in the mixture having at adjusted composition ratio
· A mixture containing a modified polymer produced by modifying and polymerizing the components in the mixture having an adjusted composition ratio
· A modified product obtained by further modifying the isolated simple substance
· A polymer obtained by further polymerizing the isolated simple substance
· A modified polymer product obtained by further modifying and polymerizing the isolated simple substance

The simple substance includes multimers such as dimer, trimer, and the like.

From the viewpoint of improvement in the biodegradation rate of resin particles, the cardanol compound is preferably at least one compound selected from a group including a compound represented by general formula (CDN1), and a polymer produced by polymerizing a compound represented by the general formula (CDN1).

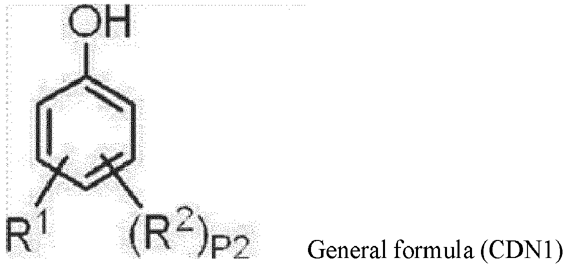

In the general formula (CDN1), R¹ represents an alkyl group which may have a substituent, or an unsaturated aliphatic group which has a double bond and may have a substituent. R² represents a hydroxyl group, a carboxyl group, an alkyl group which may have a substituent, or an unsaturated aliphatic group which has a double bond and may have a substituent. P2 represents an integer of 0 or more and 4 or less. When P2 is 2 or more, plural groups as R² may be the same or different.

In the general formula (CDN1), an alkyl group represented by R¹ which may have a substituent is preferably an alkyl group having 3 or more and 30 or less carbon atoms, more preferably an alkyl group having 5 or more and 25 or less carbon atoms, and still more preferably an alkyl group having 8 or more and 20 or less carbon atoms.

Examples of a substituent include a hydroxyl group; substituents having an ether bond, such as an epoxy group, a methoxy group, and the like; substituents having an ester bond, such as an acetyl group, a propionyl group, and the like; and the like.

Examples of an alkyl group which may have a substituent include a pentadecan-1-yl group, a heptan-1-yl group, an octan-1-yl group, a nonan-1-yl group, a decan-1-yl group, an undecan-1-yl group, a dodecan-1-yl group, a tetradecan-1-yl group, and the like.

In the general formula (CDN1), an unsaturated aliphatic group represented by R¹ which has a double bond and may have a substituent is preferably an unsaturated aliphatic group having 3 or more and 30 or less carbon atoms, more preferably an unsaturated aliphatic group having 5 or more and 25 or less carbon atoms, and still more preferably an unsaturated aliphatic group having 8 or more and 20 or less carbon atoms.

The number of double bonds possessed by an unsaturated aliphatic group is preferably 1 or more and 3 or less.

Examples of a substituent include the same as those cited as the substituent of the alkyl group described above.

Examples of an unsaturated aliphatic group which has a double bond and may have a substituent include a pentadeca-8-en-1-yl group, a pentadeca-8,11-dien-1-yl group, a pentadeca-8,11,14-trien-1-yl group, a pentadeca-7-en-1-yl group, a pentadeca-7,10-dien-1-yl group, a pentadeca-7,10,14-trien-1-yl group, and the like.

In the general formula (CDN1), R¹ is preferably pentadeca-8-en-1-yl group, pentadeca-8,11-dien-1-yl group, pentadeca-8,11,14-trien-1-yl group, pentadeca-7-en-1-yl group, pentadeca-7,10-dien-1-yl group, or pentadeca-7,10,14-trien-1-yl group.

In the general formula (CDN1), preferred examples of an alkyl group represented by R² which may have a substituent and an unsaturated aliphatic group represented by R² which has a double bond and may have a substituent include the same as those cited as an alkyl group represented by R¹ which may have a substituent and an unsaturated aliphatic group represented by R¹ which has a double bond and may have a substituent.

The compound represented by the general formula (CDN1) may be further modified. For example, the compound may be epoxidated, and from the viewpoint of improvement in the biodegradation rate of resin particles, specifically, the compound is preferably a compound having a structure in which a hydroxyl group possessed by the compound represented by the general formula (CDN1) is substituted by a group represented by a group (EP) below, that is a compound represented by general formula (CDN1-e) below.

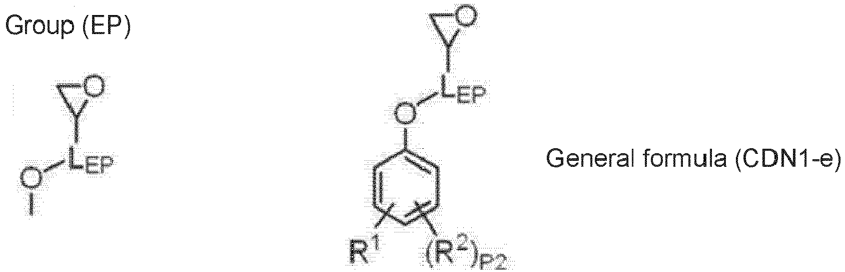

In the group (EP) and the general formula (CDN1-e), L_{EP} represents a single bond or a di valent linking group. In the general formula (CDN1-e), R¹, R², and P2 each represent the same meaning as R¹, R², and P2 in the general formula (CDN1).

In the group (EP) and the general formula (CDN1-e), examples of a divalent linking group represented by L_{EP} include an alkylene group which may have a substituent (preferably an alkylene group having 1 or more and 4 or less carbon atoms and more preferably an alkylene group having 1 carbon atom), a -CH₂CH₂OCH₂CH₂- group, and the like.

Examples of the substituent include the same as those cited as the substituent of R¹ in the general formula (CDN1).

L_{EP} is preferably a methylene group.

A polymer produced by polymerizing the compound represented by the general formula (CDN1) represents a polymer produced by polymerizing at least two compounds represented by the general formula (CDN1) through or without through a linking group.

A polymer produced by polymerizing the compound represented by the general formula (CDN1) is, for example, a compound represented by general formula (CDN2) below.

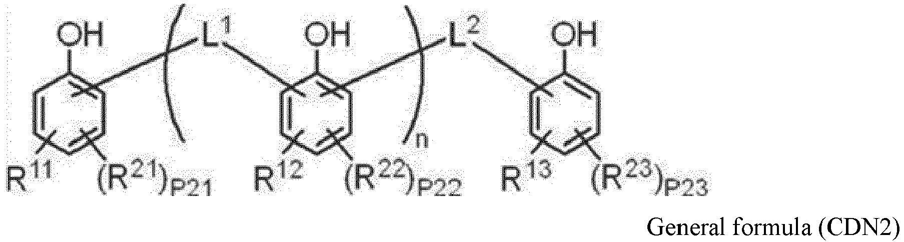

In the general formula (CDN2), R¹¹, R¹², and R¹³ each independently represent an alkyl group which may have a substituent, or an unsaturated aliphatic group which has a double bond and may have a substituent. R²¹, R²², and R²³ each independently represent a hydroxyl group, a carboxyl group, an alkyl group which may have a substituent, or an unsaturated aliphatic group which has a double bond and may have a substituent. P21 and P23 each independently represent an integer of 0 or more and 3 or less, and P22 represents an integer of 0 or more and 2 or less. L¹ and L² each independently represent a divalent linking group. n represents an integer of 0 or more and 10 or less. When P21 is 2 or more, plural groups as R²¹ may be the same or different, when P22 is 2 or more, plural groups as R²² may be the same or different, and when P23 is 2 or more, plural groups as R²³ may be the same or different. When n is 2 or more, plural groups as each of R¹², R²², and L¹ may be the same or different, and when n is 2 or more, plural numbers as P22 may be the same or different.

In the general formula (CDN2), preferred examples of an alkyl group represented by each of R¹¹, R¹², R¹³, R²¹, R²², and R²³, which may have a substituent, and an unsaturated aliphatic group represented by each of R¹¹, R¹², R¹³, R²¹, R²², and R²³, which has a double bond and may have a substituent, include the same as those cited as R¹ in the general formula (CDN1).

In the general formula (CDN2), examples of a divalent linking group represented by each of L¹ and L² include an alkylene group which may have a substituent (preferably an alkylene group having 2 or more and 30 or less carbon atoms and more preferably an alkylene group having 5 or more and 20 or less carbon atom), and the like.

Examples of the substituent include the same as those cited as the substituent of R¹ in the general formula (CDN1).

In the general formula (CDN2), n is preferably 1 or more and 10 or less and more preferably 1 or more and 5 or less.

The compound represented by the general formula (CDN2) may be further modified. For example, the compound may be epoxidated, and specifically, the compound may be a compound having a structure in which a hydroxyl group possessed by the compound represented by the general formula (CDN2) is substituted by group (EP) below, that is, a compound represented by general formula (CDN2-e) below.

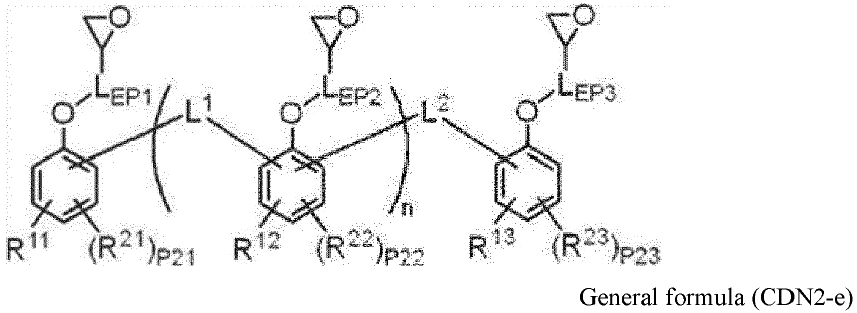

In the general formula (CDN2-e), R¹¹, R¹², R¹³, R²¹, R²², R²³, P21, P22, P23, L¹, L², and n each represent the same meaning as R¹¹, R¹², R¹³, R²¹, R²², R²³, P21, P22, P23, L¹, L², and n in the general formula (CDN2).

In the general formula (CDN2-e), L_{EP1}, L_{EP2}, and L_{EP3} each independently represent a single bond or a divalent linking group. When n is 2 or more, plural groups present as L_{EP2} may be the same or different.

In the general formula (CDN2-e), preferred examples of a divalent linking group represented by each of L_{EP1}, L_{EP2}, and L_{EP3} include the same as those cited as L_{EP} in the general formula (CDN1-e)

A polymer produced by polymerizing the compound represented by the general formula (CDN1) may be, for example, a polymer produced by three-dimensionally crosslinking and polymerizing at least three or more compounds represented by the general formula (CDN1) through or without through a linking group. A polymer produced by three-dimensionally crosslinking and polymerizing the compound represented by the general formula (CDN1) is, for example, a compound represented by a structural formula below.

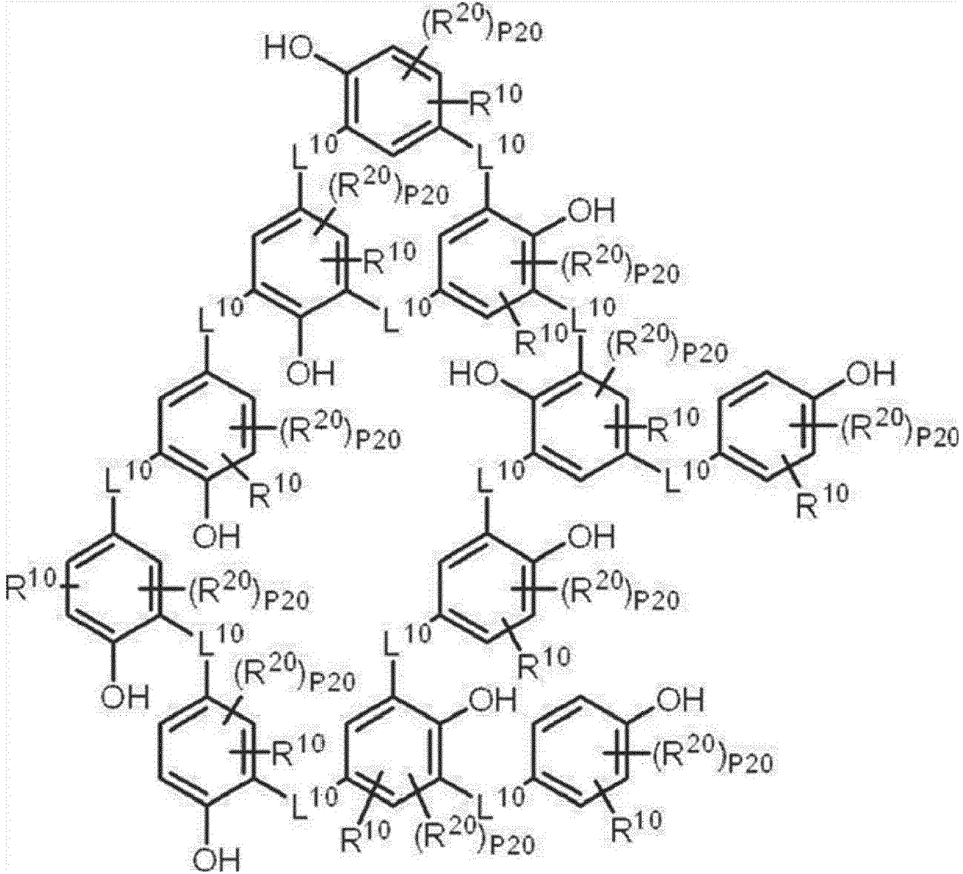

In the structural formula, R¹⁰, R²⁰, and P20 each independently represent the same meaning as R¹, R², and P2 in the general formula (CDN1). L¹⁰ represents a single bond or a divalent linking group. The plural groups present as each of R¹⁰, R²⁰, and L¹⁰ may be the same or different. Plural numbers present as P20 may be the same or different.

In the structural formula, examples of a divalent linking group represented by L¹⁰ include an alkylene group which may have a substituent (preferably an alkylene group having 2 or more and 30 or less carbon atoms and more preferably an alkylene group having 5 or more and 20 or less carbon atom), and the like.

Examples of the substituent include the same as those cited as the substituent of R¹ in the general formula (CDN1).

The compound represented by the structural formula may be further modified. For example, the compound may be epoxidated, and specifically, the compound may be a compound having a structure in which a hydroxyl group possessed by the compound represented by the structural formula is substituted by group (EP) below, that is, a polymer produced by three-dimensionally crosslinking and polymerizing the compound represented by general formula (CDN1-e).

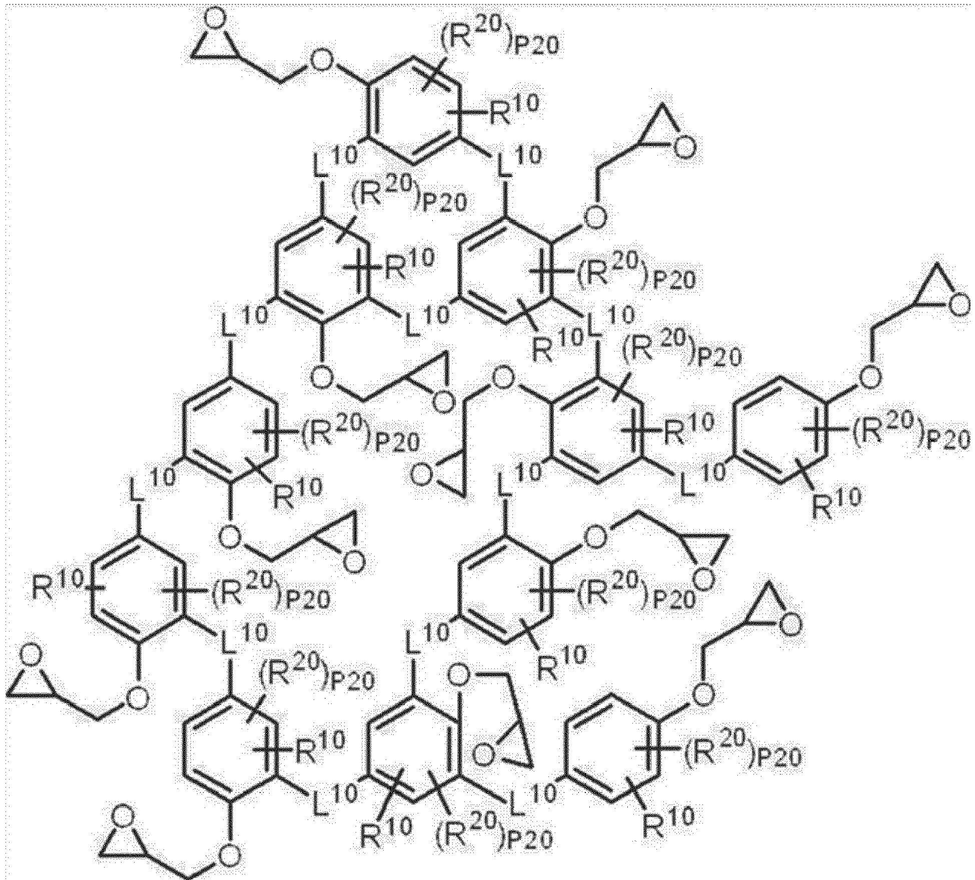

In the structural formula, R¹⁰, R²⁰, and P20 each independently represent the same meaning as R¹, R², and P2 in the general formula (CDN1-e). L¹⁰ represents a single bond or a divalent linking group. The plural groups present as each of R¹⁰, R²⁰, and L¹⁰ may be the same or different. Plural numbers present as P20 may be the same or different.

In the structural formula, examples of a divalent linking group represented by L¹⁰ include an alkylene group which may have a substituent (preferably an alkylene group having 2 or more and 30 or less carbon atoms and more preferably an alkylene group having 5 or more and 20 or less carbon atom), and the like.

Examples of the substituent include the same as those cited as the substituent of R¹ in the general formula (CDN1).

From the viewpoint of improvement in transparency of a resin molded product, the cardanol compound preferably includes a cardanol compound having an epoxy group and more preferably is a cardanol compound having an epoxy group.

A commercial product may be used as the cardanol compound. Examples of the commercial product include NX-2024, Ultra LITE 2023, NX-2026, GX-2503, NC-510, LITE 2020, NX-9001, NX-9004, NX-9007, NX-9008, NX-9201, and NX-9203, which are manufactured by Cardolite Corporation, LB-7000, LB-7250, and CD-5L, which are manufactured by Tohoku Chemical Industries Ltd., and the like. Examples of a commercial product of the cardanol compound having an epoxy group include NC-513, NC-514S, NC-547, LITE513E, and Ultra LTE 513, which are manufactured by Cardolite Corporation, and the like.

From the viewpoint of improvement in the biodegradation rate of the resin molded product, the hydroxyl value of the cardanol compound is preferably 100 mgKOH/g or more, more preferably 120 mgKOH/g or more, and still more preferably 150 mgKOH/g or more. The hydroxyl value of the cardanol compound is measured according to method A of ISO 14900.

When the cardanol compound having an epoxy group is used as the cardanol compound, from the viewpoint of improvement in transparency of the resin molded product, the epoxy equivalent is preferably 300 or more and 500 or less, more preferably 350 or more 480 or less, and still more preferably 400 or more and 470 or less. The epoxy equivalent of the cardanol compound having an epoxy group is measured according to ISO 3001.

From the viewpoint of improvement in the biodegradation rate of the resin molded product, the molecular weight of the cardanol compound is preferably 250 or more and 1000 or less, more preferably 280 or more and 800 or less, and still more preferably 300 or more and 500 or less.

The cardanol compounds may be used alone or in combination of two or more.

### (Particles D)

From the viewpoint of fusionability, the resin composition according to the present exemplary embodiment preferably includes core-shell structure particles D having a core layer and a shell layer present on the surface of the core layer.

When the resin composition according to the present exemplary embodiment includes the particles D, the resin molded product having high fusionability with another member can be easily produced. The reason for this is supposed that the particles D are selectively unevenly distributed in the polylactic acid and thus decrease the elastic modulus of the polylactic acid.

The core-shell structure particles D may have one or more other shell layers between the core layer and the shell layer.

The core-shell structure particles D are particles having a core layer as an innermost layer and a shell layer as an outermost layer (specifically, a polymer produced by graft-polymerizing another polymer to the polymer constituting the core layer).

In addition, one or more other layers (for example, 1 or more and 6 or less other layers) may be present between the core layer and the shell layer. When the other layers are present, the core-shell structure particles D are composed of a multilayered polymer produced by graft-polymerizing plural types of polymers to the polymer constituting the core layer.

The core layer is preferably a rubber layer. Examples of the rubber layer include layers of (meth)acrylic rubber, silicone rubber, styrene rubber, conjugated diene rubber, α-olefin rubber, nitrile rubber, urethane rubber, polyester rubber, polyamide rubber, butadiene rubber, copolymer rubber of two or more of these, and the like.

Among these, the rubber layer is preferably a layer of (meth)acrylic rubber, silicone rubber, styrene rubber, conjugated diene rubber, α-olefin rubber, copolymer rubber of two or more of these, or the like.

The rubber layer may be a rubber layer formed by copolymerizing and crosslinking a crosslinking agent (divinylbenzene, allyl acrylate, butylene glycol diacrylate, or the like).

The (met)acrylic rubber is, for example, polymer rubber produced by polymerizing a (meth)acrylic component (for example, a (meth)acrylic acid alkyl ester having 2 or more and 6 or less carbon atoms, or the like).

The silicone rubber is, for example, rubber configurated by a silicone component (polydimethylsiloxane, polyphenylsiloxane, or the like).

The styrene rubber is, for example, polymer rubber produced by polymerizing a styrene component (styrene, α-methylstyrene, or the like).

The conjugated diene rubber is, for example, polymer rubber produced by polymerizing a conjugated diene component (butadiene, isoprene, or the like).

The α-olefin rubber is, for example, polymer rubber produced by polymerizing a α-olefin component (ethylene, propylene, 2-methylpropylene, or the like).

Examples of the copolymer rubber include copolymer rubber produced by polymerizing two or more (meth)acrylic components, copolymer rubber produced by polymerizing a (meth)acrylic component and a silicone component, a copolymer of a (meth)acrylic component, a conjugated diene component, and a styrene component, and the like.

The shell layer is, for example, a layer containing at least one polymer selected from a glycidyl group-containing vinyl component, a (meth)acrylic acid alkyl ester, an unsaturated dicarboxylic anhydride, an aliphatic vinyl component, an aromatic vinyl compound, a vinyl cyanide compound, a maleimide compound, and (meth)acrylic acid. The polymer configurating the shell layer may be polymerized with a vinyl compound other than the above compound.

Among these, the shell layer is preferably a layer containing a polymer produced by polymerizing at least one selected from a glycidyl group-containing vinyl component, a (meth)acrylic acid alkyl ester, and an unsaturated dicarboxylic acid anhydride.

Examples of the glycidyl group-containing vinyl component include glycidyl (meth)acrylate, glycidyl itaconate, diglycidyl itaconate, allyl glycidyl ether, styrene-4-glycidyl ether, 4-glycidylstyrene, and the like.

Examples of the (meth)acrylic acid alkyl ester include methyl (meth)acrylate, ethyl (meth)acrylate, n-propyl (meth)acrylate, n-butyl (meth)acrylate, tert-butyl (meth)acrylate, n-hexyl (meth)acrylate, 2-ethylhexyl (meth)acrylate, cyclohexyl (meth)acrylate, stearyl (meth)acrylate, octadecyl (meth)acrylate, and the like. The (meth)acrylic acid alkyl ester has an alkyl chain in which hydrogen may be partially substituted. Examples of a substituent include an amino group, a hydroxyl group, a halogen group, and the like.

Examples of the unsaturated dicarboxylic anhydride include maleic anhydride, itaconic anhydride, glutaconic anhydride, citraconic anhydride, aconitic anhydride, and the like. Among these, maleic anhydride is preferred.

Examples of one or more other layers present between the core layer and the shell layer include layers of the polymers described for the shell layer.

The average primary particle diameter of the core-shell structure particles D is not particularly limited, but from the viewpoint of fusionability, it is preferably 50 nm or more and 500 nm or less, more preferably 50 nm or more and 400 nm or less, particularly preferably 100 nm or more and 300 nm or less, and most preferably 150 nm or more and 250 nm or less.

The average primary particle diameter represents a value measured by the following method. The maximum diameter of primary particles is considered as the primary particle diameter, and the primary particle diameters of 100 particles are measured by observation using a scanning electron microscope and averaged to determine a number-average primary particle diameter. Specifically, the dispersion state of the core-shell structure particles D in the resin composition is observed by a scanning electron microscope.

The core-shell structure particles D can be formed by a known method.

A known method is, for example, an emulsion polymerization method. A specific example of the production method is the following method. First, core particles (core layers) are formed by emulsion polymerization of a monomer mixture, and then shell layers are formed on the peripheries of the core particles (core layers) by emulsion polymerization of another monomer mixture in the presence of the core particles (core layers), forming a core-shell structure polymer.

In addition, when another layer is formed between the core layer and the shell layer, emulsion polymerization of another monomer mixture is repeated, thereby producing the intended core-shell structure particles D configured by the core layer, the other layer, and the shell layer.

Examples of a commercial product of the particles D include "Metablen" (registered trademark) manufactured by Mitsubishi Chemical Corporation, "Kane Ace" (registered trademark) manufactured by Kaneka Corporation, "Paraloid" (registered trademark) manufactured by Roam & Haas Co., "Staphyloid" (registered trademark) manufactured by Aica Kogyo Co., Ltd., "Preface" (registered trademark) manufactured by Kuraray Co., Ltd., and the like.

On type or a combination of two or more types of particles D may be used.

### (Metal oxide E)

From the viewpoint of fusionability, the resin composition according to the present exemplary embodiment preferably includes a metal oxide E.

When the resin composition according to the present exemplary embodiment includes the metal oxide E, a resin molded product having high fusionability with another member can be easily produced. The reason for this is supposed that the metal oxide E is partially exposed on the surface of the resin composition and functions as an anchor after fusion.

The metal oxide E is not particularly limited, but an oxide of a metal can be used.

In this case, a metal does not include silicon.

Examples of the metal oxide E include titanium oxide, barium titanate, iron oxide, zinc oxide, strontium titanate, and the like. From the viewpoint of fusionability, titanium oxide or zinc oxide is preferred, and titanium oxide is more preferred.

These metal oxides E may be used alone or a combination of two or more.

### (Contents of various materials)

In the resin composition according to the present exemplary embodiment, the content of the polylactic acid B relative to the content of the cellulose acylate A (that is, the content of polylactic acid B/content of cellulose acylate A) exceeds 0.5 and 0.9 or less, and from the viewpoint of fusionability, this value is preferably 0.6 or more and 0.8 or less, and more preferably 0.6 or more and 0.7 or less.

In the resin composition according to the present exemplary embodiment, the content of the compound C relative to the content of the cellulose acylate A (that is, the content of compound C/content of cellulose acylate A) exceeds 0.15 and 0.3 or less, and from the viewpoint of fusionability, it is preferably 0.17 or more and 0.3 or less, and more preferably 0.2 or more and 0.3 or less.

When the resin composition according to the present exemplary embodiment includes the particles D, the content of the particles D relative to the content of the cellulose acylate A (that is, the content of particles D/content of cellulose acylate A) is preferably 0.05 or more and 0.15 or less, more preferably 0.07 or more and 0.13 or less, and still more preferably 0.10 or more and 0.12 or less.

When the content of the particles D relative to the content of the cellulose acylate A is 0.05 or more, the decrease in elastic modulus of polylactic acid easily becomes large. While this value is 0.15 or less, an excessive increase in flexibility of polylactic acid is suppressed, and thus the shape of the resin molded product produced by using the resin composition can be easily maintained, thereby consequently improving fusionability with another member.

When the resin composition according to the present exemplary embodiment includes the metal oxide E, the content of the metal oxide E relative to the content of the cellulose acylate A (that is, the content of metal oxide E/content of cellulose acylate A) is preferably 0.05 or more and 0.15 or less, more preferably 0.07 or more and 0.13 or less, and still more preferably 0.08 or more and 0.12 or less.

When the content of the metal oxide E relative to the content of the cellulose acylate A is 0.05 or more, the anchor effect of the metal oxide E is easily enhanced. While this value is 0.15 or less, the flexibility of the resin molded product produced by using the resin composition can be maintained, and thus the occurrence of cracking or the like in the resin molded product is suppressed.

In the resin composition according to the present exemplary embodiment, from the viewpoint of fusionability, the content of the cellulose acylate A relative to the whole mass of the resin composition is preferably 30% by mass or more and 70% by mass or less, more preferably 40% by mass or more 60% by mass or less, and still more preferably 45% by mass or more and 55% by mass or less.

### (Weld-line impact strength)

The resin composition according to the present exemplary embodiment has a weld-line impact strength of less than 10 kJ/m², and from the viewpoint of fusionability, the weld-line impact strength is preferably 2 kJ/m² or more and 9 kJ/m² or less, more preferably 3 kJ/m² or more and 7 kJ/m² or less, and still more preferably 3 kJ/m² or more and 5 kJ/m² or less.

### · Procedures of measurement of weld-line impact strength

The weld-line impact strength is measured according to the following procedures.

A multi-purpose dumbbell test piece (measurement part width: 10 mm, thickness: 4 mm) having a weld-line at the longitudinal direction center is formed. The test piece is notched by a method according to ISO 179-1 (2010) using a notching tool (manufactured by Toyo Seiki Seisaku-sho, Ltd., A4E) so as to form a notch of a weld-line part so that the notch is a single notch and notch type A, and the remaining width of the notched test piece is 8 mm. The notched test piece is set in an impact strength measuring device (manufactured by Toyo Seiki Seisaku-sho, ltd., Charpy auto impact tester CHN3 model) so as to apply edgewise impact, and weld-line impact strength is measured at 23°C.

In the resin composition according to the present exemplary embodiment, the weld-line impact strength relative to Charpy impact strength (that is, weld-line impact strength/Charpy impact strength) is less than 0.5, and from the viewpoint of fusionability, this value is preferably 0.25 or more and 0.47 or less, more preferably 0.27 or more and 0.46 or less, and still more preferably 0.30 or more and 0.42 or less.

The value of weld-line impact strength relative to Charpy impact strength is calculated by diving the value of weld-line impact strength measured according to the procedures described above in "· Procedures of measurement of weld-line impact strength" by the value of Charpy impact strength measured according to the procedures described below in "· Procedures of measurement of Charpy impact strength".

### · Procedures of measurement of Charpy impact strength

An ISO multi-purpose dumbbell test piece (measurement part width: 10 mm, thickness: 4 mm) is formed. The test piece is notched by a method according to ISO 179-1 (2010) using a notching tool (manufactured by Toyo Seiki Seisaku-sho, Ltd., A4E) so that the notch is a single notch and notch type A, and the remaining width of the notched test piece is 8 mm. The notched test piece is set in an impact strength measuring device (manufactured by Toyo Seiki Seisaku-sho, ltd., Charpy auto impact tester CHN3 model) so as to apply edgewise impact, and Charpy impact strength is measured at 23°C (unit of measured value: kJ/m²).

### <Resin molded product>

A resin molded product according to the presenter exemplary embodiment includes the resin composition according to the present exemplary embodiment.

The composition of the components contained in the resin composition is same as that of the resin composition according to the present exemplary embodiment, and the preferred form is the same as the resin composition described above.

Examples of the shape of the resin molded product include, but are not particularly limited to, a sheet shape, a cubic shape, a spherical shape, and the like.

From the viewpoint of the high degree of freedom of the shape, a method for producing the resin molded product according to the present exemplary embodiment may be a method of injection-molding the resin composition according to the present exemplary embodiment.

The cylinder temperature for injection molding is, for example, 160°C or more and 280°C or less, and preferably 180°C or more and 240°C or less. The mold temperature for injection molding is, for example, 40°C or more and 90°C or less, and preferably 40°C or more and 60°C or less.

Injection molding may be performed by using a commercial apparatus, for example, NEX500 manufactured by Nissei Plastic Industrial Co., Ltd., NEX150 manufactured by Nissei Plastic Industrial Co., Ltd., NEX7000 manufactured by Nissei Plastic Industrial Co., Ltd., PNX40 manufactured by Nissei Plastic Industrial Co., Ltd., SE50D manufactured by Sumitomo Machinery Co., Ltd., and the like.

The resin molded product according to the present exemplary embodiment may be a resin molded product obtained by another molding method. Examples of the other molding method which may be applied include extrusion molding, blow molding, heat press molding, calender molding, coating molding, cast molding, dipping molding, vacuum molding, transfer molding, and the like.

The resin molded product according to the present exemplary embodiment is preferably used for applications such as electronic/electric equipment, office equipment, a home electric appliance, an automobile exterior material, a toy, a container, and the like. Specific examples of applications of the resin molded product according to the present exemplary embodiment include a housing of an electronic/electric equipment or home electric appliance; various components of electronic/electric equipment or home electric appliance; interior components of automobile cars; a block assembly toy; a plastic model kit; CD-ROM or DVD housing case; tableware; a drink bottle; a food tray; lapping material; a film; a sheet; an IC chip-embedded card; and the like.

### <Laminate>

A laminate according to the present exemplary embodiment is produced by laminating the resin molded produce according to the present exemplary embodiment and another member.

The resin molded product according to the present exemplary embodiment has high fusionability with another member, and thus, in the laminate according to the present exemplary embodiment, the resin molded product is hardly peeled from the other member.

The resin molded product according to the present exemplary embodiment is applied as the resin molded product applied to the laminate, and the preferred form is the same as described above.

Examples of the shape of the resin molded product include, but are not particularly limited to, a sheet shape, a cubic shape, a spherical shape, and the like, and from the viewpoint of fusionability, a sheet shape is preferred.

The other member is not particularly limited, but may be the resin molded product according to the present exemplary embodiment or another resin molded product having a resin composition different from the resin molded product according to the present exemplary embodiment.

Examples of the other resin molded product include a resin molded product containing a known thermoplastic resin or thermosetting resin.

Examples of the shape of the other resin molded product applied to the laminate include, but are not particularly limited to, a sheet shape, a cubic shape, a spherical shape, and the like, and from the viewpoint of fusionability, a sheet shape is preferred.

The laminate according to the present exemplary embodiment preferably includes a component between the resin molded product and the other member.

The resin molded product according to the present exemplary embodiment applied to the laminate has high fusionability with another member, and thus, even when a component is contained between the resin molded product and the other member, in the laminate according to the present exemplary embodiment, the resin molded product is hardly peeled from the other member, thereby easily holding the component.

Examples of the component include, but are not particularly limited to, an IC chip, a film electrode, a metal plate, a thin-film battery, a paper photograph, and the like.

Specific examples of the laminate according to the present exemplary embodiment include an IC chip-embedded card, a card power supply, a design card, and the like, and from the viewpoint of easily exhibiting the effect of fusionability, an IC-chip embedded card is preferred.

Specific examples of the IC chip-embedded card include a Felica card (registered trademark), various ID cards, various credit cards, various point cards, my number cards, various license certificates, and the like.

### EXAMPLES

Examples are described below, but the present disclosure is not limited to these examples. In description below, all "parts" and "%" are on mass basis unless otherwise specified.

### <EXAMPLES 1 to 26 and COMPARATIVE EXAMPLES 1 to 5>

### (Formation of resin composition)

Cellulose acylate A, polylactic acid B, compound C, particles D, and metal oxide E of the types as described in Table 1 are mixed in parts by mass as described in Table 1, and then extrusion-molded by using a twin-screw extruder (manufactured by Shibaura Machine Co., Ltd., TEM26SX) under kneading conditions and extrusion-molding conditions as described in Table 1. The resultant strand is cooled by a quench pool and then cut by a strand cutter to produce a pellet-shaped resin composition.

### (Formation of laminate A)

The resin composition produced according to the procedures described above is processed to a film by using a film processing apparatus (manufactured by Toyo Seiki Seisaku-sho, ltd., Labo Plastomill with a T-die take-off device) at a cylinder temperature shown in Table 2, forming a roll film having a width of 200 mm and a thickness of 200 µm. The film is cut into a width of 50 mm and a length of 100 mm to produce two resin molded products as sample sheets. One of the sample sheets is used as the resin molded product, and the other is used as another member, and the two sample sheets are superposed. A Teflon (registered trademark) sheet of 50 mm in width × 20 mm in length is inserted between the two sample sheets at an end thereof, and then pressed by using a single-action press device (manufactured by Toyo Seiki Seisaku-sho, ltd., Labopress P2-30T) at a temperature of 140°C and a press pressure of 50 kN, producing a laminate A unfused only at an end portion of 20 mm.

### (Formation of laminate B)

According to the same procedures as in "Formation of laminate A", a resin molded product is obtained as sample sheet 1 from the resin composition produced according to the procedures described above. Biomass polyethylene terephthalate (manufactured by Lotte Chemical Corporation, BIO BCB80) is processed to a film by using the film processing apparatus described above at a cylinder temperature 280°C, forming a roll film having a width of 200 mm and a thickness of 200 µm. The film is cut into a width of 50 mm and a length of 100 mm to produce sample sheet 2 used as another member. The sample 1 and the sample sheet 2 are superposed, and a Teflon (registered trademark) sheet of 50 mm in width 20 mm in length is inserted between the two sample sheets at an end thereof, and then pressed by using the single-action press device described above at a temperature of 160°C and a press pressure of 100 kN, producing a laminate B unfused only at an end portion of 20 mm.

### (Formation of laminate C)

A laminate C unfused only at an end portion of 20 mm is obtained according to the same procedures as in "Formation of laminate B" except that an object to be pressed by the single-action press device is produced by laminating the resin molded product as the sample sheet 1 and the other member as the sample sheet 2 with an IC chip (manufactured by Hitachi Power Systems Ltd., ECN30110F/P/PN/S) interposed as a component therebetween.

### <Evaluation>

### (Measurement of weld-line impact strength)

The weld-line impact strength of the resin composition obtained in each of the examples is measured according to "· Procedures of measurement of weld-line impact strength" described above using a multipurpose dumbbell teat piece (measurement part width: 10 mm, thickness: 4 mm) having a weld line at the longitudinal direction center, which is formed according to procedures below. The results are shown in Table 1 (described in a column below the column described as "Weld line" in Table 1).

### - Procedures for forming multipurpose dumbbell test piece having weld line -

With respect to the resin composition produced in each of the example, a multipurpose dumbbell test piece is formed by using an injection molding apparatus (manufactured by Nissei Plastic industrial Co., Ltd., NEX15III) using a multipurpose dumbbell test piece mold under kneading conditions and extrusion-molding conditions as described in Table 1. Also, a multipurpose dumbbell test piece having a weld line at the longitudinal direction center is formed by a multipurpose dumbbell test piece mold formed so to as flow a resin from both ends of a dumbbell.

### (Measurement of Sharpy impact strength and calculation of weld-line impact strength/Sharpy impact strength)

The Sharpy impact strength of the resin composition obtained in each of the examples is measured according to ". Procedures of measurement of Sharpy impact strength" described above using an ISO multipurpose dumbbell teat piece (measurement part width: 10 mm, thickness: 4 mm) formed according to procedures below. The weld-line impact strength relative to Sharpy impact strength (that is, weld-line impact strength/Sharpy impact strength) is calculated, and the results are shown in Table 1 (described in a column below the column described as "Weld line/Sharpy" in Table 1).

### - Procedures for forming ISO multipurpose dumbbell test piece -

An ISO multipurpose dumbbell test piece is formed by injection-molding the resin composition produced in each of the examples using an injection molding apparatus (manufactured by Nissei Plastic industrial Co., Ltd., NEX15III) under kneading conditions and extrusion-molding conditions described in Table 1.

### (Evaluation of peeling strength)

The peeling strength of each of the laminate A, the laminate B, and the laminate C produced in each of the examples is measured by clamping the unfused end portion of each of the laminates using an autograph (manufactured by Shimadzu Corporation, AG-XPlus). The higher peeling strength indicates higher fusionability of the resin molded product. The results are shown in Table 2.

**[Table 1]**

| | Composition | | | | | | | | | | | | | | Kneading condition | Injection molding condition | | Evaluation | |
|---|---|---|---|---|---|---|---|---|---|---|---|---|---|---|---|---|---|---|---|
| | Cellulose acylate A | | Polylactic acid B | | Compound C | | Particle D | | Metal oxide E | | B/A | C/A | D/A | E/A | Cylinder temperature (°C) | Cylinder temperature (°C) | Mold temperature (°C) | Weld-line (kJ/m²) | Weld-line/Sharpy (-) |
| | Type | Parts | Type | Parts | Type | Parts | Type | Parts | Type | Parts | | | | | | | | | |
| Example 1 | CA-1 | 100 | PL-1 | 60 | CC-1 | 20 | | | | | 0.60 | 0.20 | 0.00 | 0.00 | 180 | 180 | 30 | 7.5 | 0.33 |
| Example 2 | CA-2 | 100 | PL-1 | 60 | CC-1 | 20 | | | | | 0.60 | 0.20 | 0.00 | 0.00 | 180 | 180 | 30 | 5.1 | 0.41 |
| Example 3 | CA-3 | 100 | PL-1 | 60 | CC-1 | 20 | | | | | 0.60 | 0.20 | 0.00 | 0.00 | 180 | 180 | 30 | 5.5 | 0.45 |
| Example 4 | CA-4 | 100 | PL-1 | 60 | CC-1 | 20 | | | | | 0.60 | 0.20 | 0.00 | 0.00 | 180 | 180 | 30 | 8.1 | 0.39 |
| Example 5 | CA-1 | 100 | PL-2 | 60 | CC-1 | 20 | | | | | 0.60 | 0.20 | 0.00 | 0.00 | 180 | 180 | 30 | 7.3 | 0.39 |
| Example 6 | CA-1 | 100 | PL-3 | 60 | CC-1 | 20 | | | | | 0.60 | 0.20 | 0.00 | 0.00 | 180 | 180 | 30 | 7.4 | 0.31 |
| Example 7 | CA-1 | 100 | PL-1 | 60 | CC-2 | 20 | | | | | 0.60 | 0.20 | 0.00 | 0.00 | 180 | 180 | 30 | 7.3 | 0.45 |
| Example 8 | CA-1 | 100 | PL-1 | 60 | CC-3 | 20 | | | | | 0.60 | 0.20 | 0.00 | 0.00 | 180 | 180 | 30 | 9.2 | 0.31 |
| Comparative Example 1 | CA-1 | 100 | PL-1 | 60 | CC-4 | 20 | | | | | 0.60 | 0.20 | 0.00 | 0.00 | 180 | 180 | 30 | 7.4 | 0.39 |
| Example 9 | CA-1 | 100 | PL-1 | 55 | CC-1 | 20 | | | | | 0.55 | 0.20 | 0.00 | 0.00 | 190 | 190 | 40 | 8.3 | 0.39 |
| Example 10 | CA-1 | 100 | PL-1 | 90 | CC-1 | 20 | | | | | 0.90 | 0.20 | 0.00 | 0.00 | 170 | 170 | 30 | 4.2 | 0.44 |
| Comparative Example 2 | CA-1 | 100 | PL-1 | 50 | CC-1 | 20 | | | | | 0.50 | 0.20 | 0.00 | 0.00 | 190 | 190 | 40 | 12.5 | 0.45 |
| Comparative Example 3 | CA-1 | 100 | PL-1 | 95 | CC-1 | 20 | | | | | 0.95 | 0.20 | 0.00 | 0.00 | 170 | 170 | 30 | 3.8 | 0.55 |
| Example 11 | CA-1 | 100 | PL-1 | 60 | CC-1 | 17 | | | | | 0.60 | 0.17 | 0.00 | 0.00 | 190 | 190 | 40 | 5.8 | 0.44 |
| Example 12 | CA-1 | 100 | PL-1 | 60 | CC-1 | 30 | | | | | 0.60 | 0.30 | 0.00 | 0.00 | 170 | 170 | 30 | 9.7 | 0.33 |
| Comparative Example 4 | CA-1 | 100 | PL-1 | 60 | CC-1 | 15 | | | | | 0.60 | 0.15 | 0.00 | 0.00 | 190 | 190 | 40 | 5.0 | 0.60 |
| Comparative Example 5 | CA-1 | 100 | PL-1 | 60 | CC-1 | 32 | | | | | 0.60 | 0.32 | 0.00 | 0.00 | 170 | 170 | 30 | 16.0 | 0.37 |
| Example 13 | CA-1 | 100 | PL-1 | 60 | CC-1 | 20 | CS-1 | 10 | | | 0.60 | 0.20 | 0.10 | 0.00 | 180 | 180 | 30 | 5.6 | 0.28 |
| Example 14 | CA-1 | 100 | PL-1 | 60 | CC-1 | 20 | CS-2 | 10 | | | 0.60 | 0.20 | 0.10 | 0.00 | 180 | 180 | 30 | 4.7 | 0.41 |
| Example 15 | CA-1 | 100 | PL-1 | 60 | CC-1 | 20 | CS-3 | 10 | | | 0.60 | 0.20 | 0.10 | 0.00 | 180 | 180 | 30 | 3.8 | 0.44 |
| Example 16 | CA-1 | 100 | PL-1 | 60 | CC-1 | 20 | CS-1 | 5 | | | 0.60 | 0.20 | 0.05 | 0.00 | 180 | 180 | 30 | 4.8 | 0.45 |
| Example 17 | CA-1 | 100 | PL-1 | 60 | CC-1 | 20 | CS-1 | 15 | | | 0.60 | 0.20 | 0.15 | 0.00 | 180 | 180 | 30 | 6.1 | 0.44 |
| Example 18 | CA-1 | 100 | PL-1 | 60 | CC-1 | 20 | CS-1 | 3 | | | 0.60 | 0.20 | 0.03 | 0.00 | 180 | 180 | 30 | 4.5 | 0.45 |
| Example 19 | CA-1 | 100 | PL-1 | 60 | CC-1 | 20 | CS-1 | 17 | | | 0.60 | 0.20 | 0.17 | 0.00 | 180 | 180 | 30 | 6.3 | 0.42 |
| Example 20 | CA-1 | 100 | PL-1 | 60 | CC-1 | 20 | CS-1 | 10 | MO-1 | 10 | 0.60 | 0.20 | 0.10 | 0.10 | 180 | 180 | 30 | 3.8 | 0.35 |
| Example 21 | CA-1 | 100 | PL-1 | 60 | CC-1 | 20 | CS-1 | 10 | MO-2 | 10 | 0.60 | 0.20 | 0.10 | 0.10 | 180 | 180 | 30 | 3.7 | 0.43 |
| Example 22 | CA-1 | 100 | PL-1 | 60 | CC-1 | 20 | CS-1 | 10 | MO-3 | 10 | 0.60 | 0.20 | 0.10 | 0.10 | 180 | 180 | 30 | 3.2 | 0.44 |
| Example 23 | CA-1 | 100 | PL-1 | 60 | CC-1 | 20 | CS-1 | 10 | MO-1 | 5 | 0.60 | 0.20 | 0.10 | 0.05 | 180 | 180 | 30 | 3.9 | 0.42 |
| Example 24 | CA-1 | 100 | PL-1 | 60 | CC-1 | 20 | CS-1 | 10 | MO-1 | 15 | 0.60 | 0.20 | 0.10 | 0.15 | 180 | 180 | 30 | 3.2 | 0.43 |
| Example 25 | CA-1 | 100 | PL-1 | 60 | CC-1 | 20 | CS-1 | 10 | MO-1 | 3 | 0.60 | 0.20 | 0.10 | 0.03 | 180 | 180 | 30 | 4.2 | 0.42 |
| Example 26 | CA-1 | 100 | PL-1 | 60 | CC-1 | 20 | CS-1 | 10 | MO-1 | 17 | 0.60 | 0.20 | 0.10 | 0.17 | 180 | 180 | 30 | 3.9 | 0.44 |

**[Table 2]**

| | Cylinder temperature (°C) | Evaluation of peel strength | | |
|---|---|---|---|---|
| | | Laminate A | Laminate B | Laminate C |
| | | Peeling strength (N) | Peeling strength (N) | Peeling strength (N) |
| Example 1 | 180 | 6.8 | 6.6 | 6.2 |
| Example 2 | 180 | 6.7 | 6.5 | 6.3 |
| Example 3 | 180 | 5.8 | 5.5 | 5.3 |
| Example 4 | 180 | 5.7 | 5.5 | 5.2 |
| Example 5 | 180 | 6.5 | 6.2 | 5.9 |
| Example 6 | 180 | 6.5 | 6.2 | 5.9 |
| Example 7 | 180 | 6.7 | 6.5 | 6.2 |
| Example 8 | 180 | 6.6 | 6.4 | 6.1 |
| Example 9 | 190 | 6.5 | 6.3 | 6.0 |
| Example 10 | 170 | 6.4 | 6.2 | 5.9 |
| Example 11 | 190 | 6.3 | 6.1 | 6.0 |
| Example 12 | 170 | 6.5 | 6.2 | 5.9 |
| Example 13 | 180 | 7.9 | 7.5 | 7.2 |
| Example 14 | 180 | 7.8 | 7.5 | 7.2 |
| Example 15 | 180 | 6.5 | 6.1 | 5.8 |
| Example 16 | 180 | 8.0 | 7.8 | 7.5 |
| Example 17 | 180 | 7.8 | 7.6 | 7.3 |
| Example 18 | 180 | 6.6 | 6.3 | 6.0 |
| Example 19 | 180 | 6.5 | 6.2 | 6.0 |
| Example 20 | 180 | 10.3 | 9.9 | 9.6 |
| Example 21 | 180 | 10.2 | 9.8 | 9.5 |
| Example 22 | 180 | 8.8 | 8.4 | 8.1 |
| Example 23 | 180 | 10.3 | 9.9 | 9.5 |
| Example 24 | 180 | 10.4 | 9.9 | 9.6 |
| Example 25 | 180 | 8.5 | 8.1 | 7.8 |
| Example 26 | 180 | 8.4 | 8.1 | 7.7 |
| Comparative Example 1 | 180 | 1.5 | 1.3 | 1.1 |
| Comparative Example 2 | 190 | 1.8 | 1.5 | 1.3 |
| Comparative Example 3 | 170 | 2.2 | 1.8 | 1.6 |
| Comparative Example 4 | 190 | 1.9 | 1.6 | 1.5 |
| Comparative Example 5 | 170 | 2.4 | 2.1 | 1.9 |

In Table 1, an oblique line indicates that the corresponding component is not contained. In Table 1, abbreviations are as follows.

### <Cellulose acylate A>

CA-1: cellulose acetate propionate, CAP482-20 manufactured by Eastman Chemical Co., weight-average degree of polymerization: 820, substitution degree: 2.8
CA-2: cellulose acetate propionate, CAP482-0.5 manufactured by Eastman Chemical Co., weight-average degree of polymerization: 510, substitution degree: 2.8
CA-3: diacetyl cellulose, L50 manufactured by Daicel Corporation, weight-average degree of polymerization: 560, substitution degree: 2.4
CA-4: cellulose acetate butyrate, CAB381-20 manufactured by Eastman Chemical Co., weight-average degree of polymerization: 770, substitution degree: 2.6

### <Polylactic acid B>

PL-1: polylactic acid, Ingeo 3001D manufactured by Nature Works Ltd., in the formula (PLA), n = 1800
PL-2: polylactic acid, Terramac TE2000 manufactured by Unitika Ltd., in the formula (PLA), n = 2200
PL-3: polylactic acid, Ingeo 6252D manufactured by Nature Works Ltd., in the formula (PLA), n = 2500<

### <Compound C>

CC-1: ester compound, Daifatty 101 manufactured by Daihachi Chemical Industry Co., Ltd., weight-average molecular weight: 450
CC-2: ester compound, Adeka Cizer RS1000 manufactured by ADEKA Corporation, weight-average molecular weight: 500
CC-3: cardanol compound, GX2053 manufactured by Cardolite Corporation
CC-4: condensed phosphoric acid ester, TPP manufactured by Daihachi Chemical Industry Co., Ltd.

### <Particles D>

CS-1: core-shell structure particles D (polymer produced by graft-copolymerization of "copolymer rubber of methyl methacrylate and 2-ethylhexyl acrylate" to form a shell layer on "copolymer rubber of 2-ethylhexyl acrylate and n-butyl acrylate" serving as a core layer), average primary particle diameter = 200 nm, Metablen W600A manufactured by Mitsubishi Chemical Corporation
CS-2: core-shell structure particles D (polymer produced by graft-copolymerization of "homopolymer rubber of ethyl acrylate" to form a shell layer on "copolymer rubber of methyl arylate and styrene" serving as a core layer), average primary particle diameter = 300 nm, Metablen W300A manufactured by Mitsubishi Chemical Corporation
CS-3: core-shell structure particles D (polymer (MSB) produced by graft-copolymerization of "copolymer rubber of methyl methacrylate and styrene" to form a shell layer on "homopolymer rubber of butadiene" serving as a core layer), average primary particle diameter = 300 nm, Metablen W223A manufactured by Mitsubishi Chemical Corporation

### <Metal oxide E>

MO-1: titanium oxide, JR-403 manufactured by Tayca Corporation
MO-2: titanium oxide, SR-1 manufactured by Sakai Chemical Industry Co., Ltd.
MO-3: zinc oxide, finely ground zinc oxide manufactured by Sakai Chemical Industry Co., Ltd.

In Table 1, "B/A" represents the content of polylactic acid B relative to the content of cellulose acylate A.

In Table 1, "C/A" represents the content of compound C relative to the content of cellulose acylate A.

In Table 1, "D/A" represents the content of particles D relative to the content of cellulose acylate A.

In Table 1, "E/A" represents the content of metal oxide E relative to the content of cellulose acylate A.

The results described above indicate that the resin compositions of the examples can produce a resin molded product having high fusionability with another member.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) A resin composition including cellulose acylate A; polylactic acid B; and at least one compound C selected from the group including an ester compound and a cardanol compound, in which the content of the polylactic acid B relative to the content of the cellulose acylate A exceeds 0.5 and is 0.9 or less, and the content of the compound C relative to the content of the cellulose acylate A exceeds 0.15 and is 0.3 or less.
(((2))) The resin composition described in (((1))) including core-shell structure particles D having a core layer and a shell layer present on the surface of the core layer.
(((3))) The resin composition described in (((2))), in which the content of the particles D relative to the content of the cellulose acylate A is 0.05 or more and 0.15 or less.
(((4))) The resin composition described in any one of (((1))) to (((3))), including a metal oxide E.
(((5))) The resin composition described in (((4))), in which the content of the metal oxide E relative to the content of the cellulose acylate A is 0.05 or more and 0.15 or less.
(((6))) The resin composition described in any one of (((1))) to (((5))), in which the cellulose acylate A is cellulose acetate propionate.
(((7))) A resin composition including cellulose acylate A; polylactic acid B; and at least one compound D selected from the group including an ester compound and a cardanol compound, in which the weld-line impact strength is less than 10 kJ/m², and the weld-line impact strength relative to Charpy impact strength is less than 0.5.
(((8))) A resin molded product including the resin composition described in any one of (((1))) to (((7))).
(((9))) A laminate including the resin molded product described in (((8))) and another member laminated on the resin molded product.
(((10))) The laminate described in (((9))), including a component between the resin molded product and the other member.

According to (((1))), there is provided a resin composition which includes cellulose acylate A; polylactic acid B; and at least one compound D selected from the group including an ester compound and a cardanol compound, and which can produce a resin molded product having high fusionability with another member as compared with when the content of the polylactic acid B relative to the content of the cellulose acylate A is 0.5 or less or exceeds 0.9 or when the content of the compound C relative to the content of the cellulose acylate A 0.15 or less or exceeds 0.3.

According to (((2))), there is provided a resin composition which can produce a resin molded product having high fusionability with another member as compared with when the particles D are not contained.

According to (((3))), there is provided a resin composition which can produce a resin molded product having high fusionability with another member as compared with when the content of the particles D relative to the content of the cellulose acylate A is less than 0.05 or exceeds 0.15.

According to (((4))), there is provided a resin composition which can produce a resin molded product having high fusionability with another member as compared with when the metal oxide E is not contained.

According to (((5))), there is provided a resin composition which can produce a resin molded product having high fusionability with another member as compared with when the content of the metal oxide E relative to the content of the cellulose acylate A is less than 0.05 or exceeds 0.15.

According to (((6))), there is provided a resin composition which can produce a resin molded product having high fusionability with another member as compared with when the cellulose acylate A is diacetyl cellulose and when the cellulose acylate A is cellulose acetate butyrate.

According to (((7))), there is provided a resin composition which includes cellulose acylate A; polylactic acid B; and at least one compound D selected from the group including an ester compound and a cardanol compound, and which can produce a resin molded product having high fusionability with another member as compared with when the weld-line impact strength is 10 kJ/m² or more or when and the weld-line impact strength relative to Charpy impact strength is 0.5 or more.

According to (((8))), (((9))), or (((10))), there is provided a resin composition which includes cellulose acylate A; polylactic acid B; and at least one compound C selected from the group including an ester compound and a cardanol compound, and which can produce a resin molded product having high fusionability with another member or a laminate including the resin molded product as compared with when the content of the polylactic acid B relative to the content of the cellulose acylate A is 0.5 or less or exceeds 0.9 or when the content of the compound C relative to the content of the cellulose acylate A 0.15 or less or exceeds 0.3. Also, there is provided a resin composition which includes cellulose acylate A; polylactic acid B; and at least one compound C selected from the group including an ester compound and a cardanol compound, and which can produce a resin molded product having high fusionability with another member or a laminate including the resin molded product as compared with when the weld-line impact strength is 10 kJ/m² or more or when the weld-line impact strength relative to Charpy impact strength is 0.5 or more.

## Claims

1. A resin composition comprising:
cellulose acylate A;
polylactic acid B; and
at least one compound C selected from the group including an ester compound and a cardanol compound,
wherein the content of the polylactic acid B relative to the content of the cellulose acylate A exceeds 0.5 and is 0.9 or less; and
the content of the compound C relative to the content of the cellulose acylate A exceeds 0.15 and is 0.3 or less.

2. The resin composition according to claim 1, comprising core-shell structure particles D having a core layer and a shell layer present on the surface of the core layer.

3. The resin composition according claim 2, wherein the content of the particles D relative to the content of the cellulose acylate A is 0.05 or more and 0.15 or less.

4. The resin composition according to any one of claims 1 to 3, comprising a metal oxide E.

5. The resin composition according to claim 4, wherein the content of the metal oxide E relative to the content of the cellulose acylate A is 0.05 or more and 0.15 or less.
Is

6. The resin composition according to any one of claims 1 to 5, wherein the cellulose acylate A is cellulose acetate propionate.

7. A resin composition comprising:
cellulose acylate A;
polylactic acid B; and
at least one compound D selected from the group including an ester compound and a cardanol compound,
wherein the weld-line impact strength is less than 10 kJ/m², and
the weld-line impact strength relative to Charpy impact strength is less than 0.5.

8. A resin molded product comprising the resin composition according to any one of claims 1 to 7.

9. A laminate comprising the resin molded product according to claim 8 and another member laminated on the resin molded product.

10. The laminate according to claim 9, comprising a component between the resin molded product and the other member.
